# EUROPÄISCHE PATENTSCHRIFT

(11) **EP 2 709 775 B1**
(45) Veröffentlichungstag und Bekanntmachung des Hinweises auf die Patenterteilung: **14.10.2015**
(21) Anmeldenummer: 12721843.6
(22) Anmeldetag: 16.05.2012
(51) Int. Cl.: B08B 9/08, B09B 3/00, B08B 9/30, B65B 69/00

(54) **VORRICHTUNG UND VERFAHREN ZUM ENTLEEREN UND SPÜLEN VON MIT FLUID GEFÜLLTEN BEHÄLTERN**
DEVICE AND METHOD FOR EMPTYING AND RINSING OF CONTAINERS FILLED WITH FLUID
DISPOSITIF ET PROCÉDÉ DE VIDANGE ET DE RINÇAGE DE RÉCIPIENTS REMPLIS DE FLUIDE

(30) Priorität: 18.05.2011 EP 11166553
(43) Veröffentlichungstag der Anmeldung: 26.03.2014
(73) Patentinhaber: BASF SE, 67056 Ludwigshafen (DE)
(72) Erfinder: HUBER, Robert, 67117 Limburgerhof (DE); WEGKAMP, Heinz-Gerd, 68642 Bürstadt (DE)
(86) Internationale Anmeldenummer: PCT/EP2012/059084
(87) Internationale Veröffentlichungsnummer: WO 2012/156433

(56) Entgegenhaltungen:
- DE-A1- 4 119 659
- US-A- 5 626 042
- US-A- 6 070 762

## Beschreibung

Die vorliegende Erfindung betrifft eine Vorrichtung und ein Verfahren zum Entleeren und Spülen von mit Fluid gefüllten Behältern. Ferner betrifft die Erfindung die Verwendung der erfindungsgemäßen Vorrichtung zum Entleeren und Spülen von mit Pflanzenschutzmitteln gefüllten Behältern.

Um Behälter, die beispielsweise mit einem Pflanzenschutzmittel gefüllt sind, zu entleeren, wird eine Spritzvorrichtung mit der Entnahmeöffnung des Behälters verbunden. Mittels der Spritzvorrichtung wird dann das in dem Behälter befindliche Pflanzenschutzmittel herausgefördert und wie gewünscht versprüht. Nach dem Leeren des Behälters muss dieser abhängig von dem Pflanzenschutzmittel, mit welchem er befüllt war, gespült werden, bevor er entsorgt oder wiederverwendet werden kann. Zum Spülen des Behälters kann eine Spülflüssigkeit, z. B. Wasser, durch die Entnahmeöffnung eingelassen und wieder ausgelassen werden. Ferner gibt es Spülpistolen mit einem scharfen Dorn, mit welchem eine Wand des Behälters manuell durchstochen werden kann, woraufhin der Behälter mittels der Sprühpistole ausgespült werden kann. Nachteilig an der Verwendung solcher Spülpistolen ist jedoch, dass das manuelle Spülen für den Nutzer aufwendig ist. Außerdem besteht beim Durchstechen der Wand des Behälters für den Nutzer eine Verletzungsgefahr.

Die US 5 626 042 A beschreibt eine Vorrichtung und ein Verfahren zum Aufarbeiten von Behältern, welche Flüssigkeiten oder Gase enthalten. Dabei werden die Behälter zunächst mit einer Vorrichtung entleert. Nach dem Entleeren werden die Behälter gespült und von einer hydraulischen Presse zerdrückt. Zum Entleeren umfasst die Vorrichtung einen ringförmigen Teil, mit welchem der Behälter um eine vertikale Achse solange gedreht werden kann, bis sich eine Entnahmeöffnung in einer Position befindet, in der ein Entleerungsstab eingeführt werden kann. Die sich in dem Behälter befindende Flüssigkeit wird dann abgesaugt.

Der vorliegenden Erfindung liegt daher die Aufgabe zugrunde, eine Vorrichtung und ein Verfahren bereitzustellen, mit denen ein mit Fluid gefüllter Behälter mit geringem Aufwand entleert und gespült werden kann.

Diese Aufgabe wird erfindungsgemäß durch eine Vorrichtung mit den Merkmalen des Anspruchs 1 und ein Verfahren mit den Merkmalen des Anspruchs 8 gelöst. Vorteilhafte Ausgestaltungen und Weiterbildungen ergeben sich aus den abhängigen Ansprüchen.

Die erfindungsgemäße Vorrichtung zum Entleeren und Spülen von mit Fluid gefüllten Behältern umfasst eine Aufnahmeeinheit zur Aufnahme des Behälters und eine Entnahmeeinheit, die eine Entnahmeleitung, eine mit der Entnahmeleitung verbundene Kupplung zum Anschluss an eine Entnahmeöffnung des Behälters und eine Fördereinrichtung umfasst, mit welcher das in dem Behälter befindliche Fluid aus dem Behälter herausförderbar ist. Des Weiteren umfasst die erfindungsgemäße Vorrichtung eine Spüleinheit, die einen Spüldorn, eine mit dem Spüldorn verbundene Spülleitung und eine Steuereinrichtung umfasst. Mittels der Steuereinrichtung ist der Spüldorn so bewegbar, dass er nach dem Entleeren des Behälters automatisch eine Wand des Behälters durchsticht und den Behälter ausspült.

Vorteilhafterweise ist es bei der erfindungsgemäßen Vorrichtung nicht nötig, einen manuellen Spülvorgang durchzuführen. Der Behälter wird nach dem Entleeren automatisch ausgespült, z. B. mit einer Spülflüssigkeit, die durch mindestens eine Austrittsöffnung des Spüldorns in das Innere des Behälters gelangt. Hierdurch wird die Verwendung des Behälters für den Nutzer erleichtert. Außerdem besteht beim Durchstechen der Wand des Behälters kein Verletzungsrisiko für den Nutzer. Des Weiteren besteht aufgrund der Entnahmeeinheit der erfindungsgemäßen Vorrichtung vorteilhafterweise nicht das Risiko, dass der Nutzer in Berührung mit dem Fluid kommt, welches sich im Behälter befindet. Ein solcher Kontakt sollte beispielsweise vermieden werden, wenn sich Pflanzenschutzmittel in dem Behälter befinden. Außerdem wird durch die erfindungsgemäße Vorrichtung die Gefahr des Verschüttens von in dem Behälter befindlichem Fluid, d.h. insbesondere von Pflanzenschutzmitteln, reduziert.

Die Aufnahmeeinheit der erfindungsgemäßen Vorrichtung umfasst des Weiteren eine Dreheinrichtung, mittels welcher der Behälter nach dem Einsetzen in die Aufnahmeeinheit um einen vorgegebenen Winkel drehbar ist. Der Behälter ist beispielsweise um eine Achse drehbar, die nicht parallel zur Vertikalen, d. h. die schräg zur Vertikalen, ausgerichtet ist. Erfindungsgemäß ist der Behälter um eine Achse drehbar, die in einem Bereich von +/- 20° um die Horizontale ausgerichtet ist. Bevorzugt ist die Achse horizontal ausgerichtet, so dass der Behälter um eine horizontale Achse drehbar ist. Der Behälter kann beispielsweise um 180° um eine horizontale Achse gedreht werden. Durch die Drehung des Behälters kann die Handhabung und Entnahme des Fluids erleichtert werden, insbesondere wenn die Entnahmeöffnung nach der Drehung nach unten zeigt. Der Behälter kann auf diese Weise so umfassend wie möglich geleert werden.

Gemäß einer weiteren Ausgestaltung der erfindungsgemäßen Vorrichtung umfasst die Spüleinheit eine Hubvorrichtung, die mit dem Spüldorn und der Steuereinrichtung gekoppelt ist. In diesem Fall kann auf ein Signal der Steuereinrichtung der Spüldorn mittels der Hubvorrichtung so bewegt werden, dass er eine Wand des Behälters durchsticht.

Gemäß einer Ausgestaltung der erfindungsgemäßen Vorrichtung kann diese eine erste Erfassungseinrichtung zum Erfassen der Menge des in dem Behälter befindlichen Fluids und eine zweite Erfassungseinrichtung zum Erfassen der Menge des aus dem Behälter entnommenen Fluids aufweisen. Die erste Erfassungseinrichtung kann beispielsweise eine elektronische Empfangseinrichtung umfassen, mittels welcher von dem aufgenommenen Behälter ausgesandte Funksignale empfangbar sind. In diesem Fall kann an dem Behälter beispielsweise ein Sender oder ein Transponder befestigt sein, welcher Daten an die Empfangseinrichtung überträgt. Diese Daten können insbesondere Informationen über die Art und die Menge des in dem Behälter befindlichen Fluids enthalten. Bei dem Transponder kann es sich beispielsweise um einen RFID(radio-frequency-identification)-Transponder handeln. Dieser Transponder ist insbesondere bei der Stelle des Behälters angeordnet, bei welcher der Spüldorn den Behälter durchsticht, so dass der Transponder nach dem Spülvorgang zerstört ist.

Durch die automatische Erfassung der Art des Pflanzenschutzmittels, welches in dem Behälter enthalten ist, kann der Nutzer außerdem beim Anmischen und Ausbringen der Spritzbrühe unterstützt werden. Beispielsweise können über eine Ausgabeeinheit Hinweise zum sachgerechten Umgang mit dem Pflanzenschutzmittel, z. B. zur Mischbarkeit und zu Abstandsauflagen, ausgegeben werden.

Die zweite Erfassungseinrichtung kann beispielsweise einen Durchflussmesser umfassen, mit dem in einer Entnahmeleitung der Durchfluss des entnommenen Fluids gemessen wird. Die Entnahmemenge kann jedoch auch auf andere Weise automatisch ermittelt werden.

Bei diesen Ausgestaltungen ist die Steuereinrichtung insbesondere datentechnisch mit der Empfangseinrichtung und der Entnahmeeinheit gekoppelt, sodass die mit der Steuereinrichtung von der Empfangseinrichtung empfangenen Daten so auswertbar sind, dass Informationen über die Menge des in dem Behälter befindlichen Fluids erfasst werden. Des Weiteren kann die Steuereinrichtung datentechnisch mit der ersten und zweiten Erfassungseinrichtung und der Spüleinheit gekoppelt sein, sodass mittels der Steuereinrichtung automatisch eine Leerung des Behälters erfassbar und die anschließende Spülung des Behälters initiierbar ist.

Die vorliegende Erfindung betrifft des Weiteren die Verwendung der vorstehend beschriebenen erfindungsgemäßen Vorrichtung zum Entleeren und Spülen von Behältern, die mit einem Pflanzenschutzmittel gefüllt sind.

Bei dem Behälter handelt es sich insbesondere um solche aus Kunststoffmaterialien, d.h. der überwiegende Teil des Behälters, insbesondere die Behälterwände, wird von Kunststoffmaterialien gebildet. Der Behälter ist insbesondere formstabil, d.h., dass der Behälter beim Befüllen beziehungsweise bei mechanischer Belastung seine Form nur geringfügig ändert und in entleertem beziehungsweise unbelastetem Zustand seine ursprüngliche Form weitgehend oder vollständig zurückerhält. Typische formstabile Behälter sind Kanister, Flaschen, Tonnen, Fässer und dergleichen. Die vorgenannten Behälter weisen in der Regel wenigstens eine oder zwei Öffnungen zum Befüllen des Behälters und/oder zur Entnahme des Fluids auf. In der Regel sind diese Öffnungen mit üblichen Verschlussmitteln, wie Schraubdeckel, Stopfen, Kapseln, Hähnen, Trockenkupplungen und dergleichen versehen. Die Entnahmeöffnung ist so ausgebildet, dass die Kupplung der Entnahmeleitung fluiddicht mit ihr verbunden werden kann. Die Größe der Behälter kann über weite Bereiche variieren und ihr Innenvolumen liegt, abhängig vom Behältertyp, häufig im Bereich von 0,1 bis 1000 I.

Die Dicke der Behälterwände richtet sich naturgemäß nach der Größe beziehungsweise dem Innenvolumen der Behälter und liegt typischerweise im Bereich von 0,1 bis 10 mm und insbesondere im Bereich von 0,5 bis 5 mm (Mittel, ausgenommen solche Bereiche, in denen sich Öffnungen oder Mittel zum Transport der Behälter wie Handgriffe befinden). In dem Bereich, in dem der Spüldorn die Behälterwand zum Spülen durchsticht, ist die Dicke der Behälterwand in Abhängigkeit von dem Behältermaterial so ausgebildet, dass der Spüldorn die Behälterwand durchstechen kann.

Der Behälter kann insbesondere eine Flüssigkeit, z.B. wässrige Wirkstoffformulierungen wie wässrige Suspensionskonzentrate (WSC), wässrige Emulsionen (EW), wasserlösliche Konzentrate (WL), wässrige Suspoemulsionen (SEC), sowie für davon verschiedene Wirkstoffformulierungen, die in Wasser dispergierbar oder emulgierbar sind, beispielsweise nicht-wässrige Suspensionskonzentrate (SC), emulgierbare Konzentrate (EC), lösungsmittelhaltige, dispergierbare Konzentrate (DC), Ölsuspensionskonzentrate, wasserlösliche Konzentrate (SL), wasserdispergierbare Granulate (WG) und wasserlösliche Granulate (SG), wasserdispergierbare Pulver (WP) und wasserlösliche Pulver (SP) aufnehmen. Er kann insbesondere für die Aufnahme flüssiger Formulierungen und speziell flüssiger wässriger Formulierungen ausgebildet sein.

Bezüglich der Art der Wirkstoffe gibt es keine Beschränkungen. Es kann sich bei den Wirkstoffformulierungen um Formulierungen von Herbiziden, Fungiziden, Insektiziden, Akariziden, Nematiziden, Wachstumsregulatoren, Bakteriziden und sonstige Formulierungen handeln, wie sie typischerweise im Pflanzenschutz, einschließlich Saatgutbehandlung, und im Materialschutz, z. B. im Holzschutz, aber auch zur präventiven Bekämpfung von parasitären Organismen, welche Warmblüter befallen, eingesetzt werden.

Bei dem erfindungsgemäßen Verfahren zum Entleeren und Spülen von mit Fluid gefüllten Behältern wird der Behälter von einer Aufnahmeeinheit aufgenommen, wobei der Behälter nach dem Einsetzen in die Aufnahmeeinheit um einen vorgegebenen Winkel gedreht wird, eine Entnahmeöffnung des Behälters wird mit einer Kupplung einer Entnahmeleitung verbunden, das in dem Behälter befindliche Fluid wird aus dem Behälter herausgefördert, nach dem Entleeren des Behälters wird eine Wand des Behälters von einem Spüldorn automatisch durchstochen und der Behälter wird mittels einer mit dem Spüldorn verbundenen Spülleitung mit einer Spülflüssigkeit ausgespült. Bei dem erfindungsgemäßen Verfahren erfolgt somit die Entleerung und Spülung des Behälters automatisiert.

Ferner kann bei dem Verfahren der Behälter nach dem Einsetzen in die Aufnahmeeinheit und nach dem Verbinden der Entnahmeöffnung des Behälters mit der Kupplung der Entnahmeleitung um einen vorgegebenen Winkel automatisch gedreht werden. Der Behälter wird insbesondere so gedreht, dass die Entnahmeöffnung nach der Drehung nach unten zeigt. Der Behälter wird um eine Achse gedreht, die nicht parallel zur Vertikalen, d. h. die schräg zur Vertikalen, ausgerichtet ist. Der Behälter wird erfindungsgemäß um eine Achse gedreht, die in einem Bereich von +/- 20° um die Horizontale ausgerichtet ist. Bevorzugt ist die Achse horizontal ausgerichtet. Der Behälter wird insbesondere um 180° um eine horizontale Achse gedreht. Des Weiteren kann bevorzugt die Menge des in dem Behälter befindlichen Fluids und die Menge des aus dem Behälter entnommen Fluids erfasst werden. Nachdem erfasst worden ist, dass der Behälter geleert wurde, wird die Wand des Behälters von dem Spüldorn automatisch durchstochen und der Behälter wird mit der Spülflüssigkeit automatisch ausgespült.

Die Erfindung wird nun anhand eines Ausführungsbeispiels mit Bezug zu den Zeichnungen erläutert.
Figur 1 zeigt ein Ausführungsbeispiel der erfindungsgemäßen Vorrichtung bevor der Behälter gedreht wurde und
Figur 2 zeigt das Ausführungsbeispiel der erfindungsgemäßen Vorrichtung nachdem der Behälter gedreht wurde.

Bei dem Ausführungsbeispiel der erfindungsgemäßen Vorrichtung handelt es sich um eine Vorrichtung zum Entleeren und Spülen eines Kanisters 1, der mit einem flüssigen Pflanzenschutzmittel gefüllt ist. Der Kanister 1 umfasst eine Entnahmeöffnung 2 und einen RFID-Transponder 3, auf dem Informationen zur Menge und zur Art des in dem Kanister 1 enthaltenen Pflanzenschutzmittels gespeichert sind.

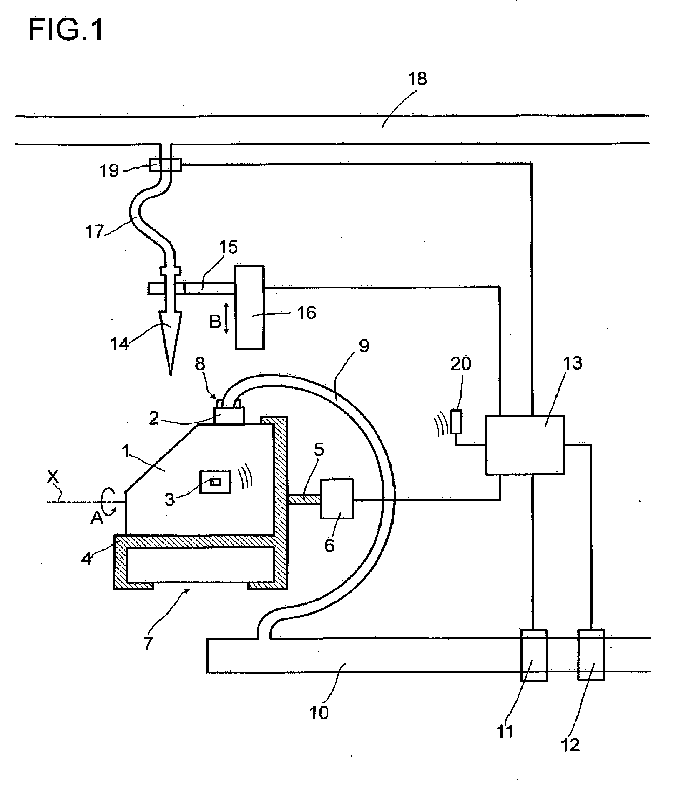

Die Vorrichtung umfasst eine Aufnahmeeinheit 4 zur Aufnahme des Kanisters 1. Wie in Figur 1 gezeigt, kann der Kanister 1 manuell so in die Aufnahmeeinheit 4 eingesetzt werden, dass er einrastet und danach fest von der Aufnahmeeinheit 4 gehalten wird.

Nach dem Einsetzen des Kanisters 1 in die Aufnahmeeinheit 4 wird eine Kupplung 8, welche am Ende einer Entnahmeleitung 9 vorgesehen ist, mit der Entnahmeöffnung 2 des Kanisters 1 flüssigkeitsdicht verbunden. Die Verbindung erfolgt so, dass bei der Entnahme des Pflanzenschutzmittels kein Pflanzenschutzmittel austreten kann.

Die Aufnahmeeinheit 4 ist ferner mit einer Dreheinrichtung ausgestattet, die eine Welle 5 und einen Motor 6 umfasst. Mittels der Dreheinrichtung kann die Aufnahmeeinheit 4 mit dem Kanister 1 in Richtung des Pfeils A um die Achse X gedreht werden. Die Achse X ist horizontal ausgerichtet. Es wäre jedoch auch möglich, dass die Ausrichtung der Achse X zwar von der Vertikalen abweicht, d. h. schräg zur Vertikalen ausgerichtet ist, jedoch auch von der Horizontalen abweicht. Die Ausrichtung der Achse X kann sich insbesondere nach der Positionierung Entnahmeöffnung 2 richten, um die Entleerung des Kanisters 1 zu gewährleisten.

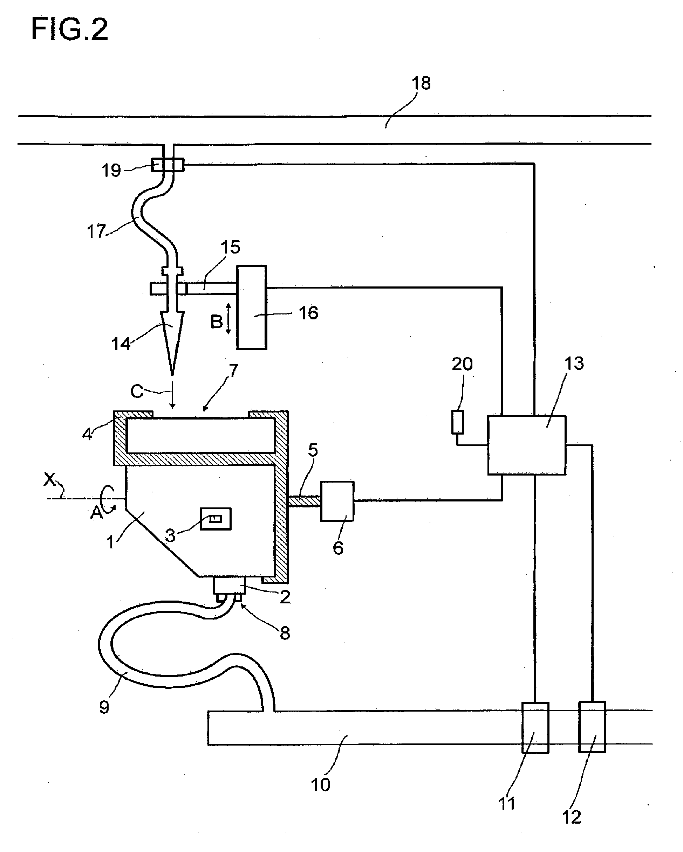

Nachdem der Kanister 1 in die Aufnahmeeinheit 4 eingesetzt und mit der Kupplung 8 verbunden wurde, wird die Aufnahmeeinheit 4 so gedreht, dass die Entnahmeöffnung 2 wie in Figur 2 gezeigt, nach unten zeigt. Diese Drehung kann vom Nutzer manuell durchgeführt werden. Es ist jedoch auch möglich, dass die Drehung mittels des Motors 6 automatisch durchgeführt wird. Hierfür ist der Motor 6 mit einer Steuereinrichtung 13 verbunden. Ferner kann ein (nicht gezeigter) Sensor vorgesehen sein, welcher die Aufnahme des Kanisters 1 in der Aufnahmeeinheit 4 und die Verbindung mit der Kupplung 8 automatisch erfasst und der nach dem Erfassen ein entsprechendes Signal an die Steuereinrichtung 13 überträgt. Die Steuereinrichtung 13 kann daraufhin automatisch die Drehung der Aufnahmeeinheit 4 durchführen.

Des Weiteren überträgt der RFID-Transponder 3 des Kanisters 1 Informationen zur Art und Menge des in dem Kanister 1 enthaltenen Pflanzenschutzmittels an eine Empfangseinrichtung 20, welche mit der Steuereinrichtung 13 verbunden ist. Auf diese Weise erfasst die Steuereinrichtung 13 wieviel von welchem Pflanzenschutzmittel in dem Kanister 1 enthalten ist.

Anschließend kann mittels einer Entnahmeeinheit das Pflanzenschutzmittel aus dem Kanister 1 herausgefördert werden. Die Entnahmeeinheit umfasst die mit der Kupplung 8 verbundene Entnahmeleitung 9. Die Entnahmeleitung 9 kann in ein Entnahmerohr 10 übergehen, in welches eine Fördereinrichtung 11 und ein Durchflussmesser 12 integriert sind. Bei der Fördereinrichtung 11 kann es sich um eine Pumpe oder, wenn der durch die Schwerkraft des Pflanzenschutzmittels erzeugte Druck zur Entnahme des Pflanzenschutzmittels ausreicht, ein einfaches Ventil handeln. Gleichzeitig erfolgt über dieses Ventil ein kontrolliertes Belüften des Kanisters 1. Die Fördereinrichtung 11 wird von der Steuereinrichtung 13 so gesteuert, dass die gewünschte Menge des flüssigen Pflanzenschutzmittels dem Kanister 1 entnommen wird. Der Durchflussmesser 12 überträgt dabei die entnommene Menge an die Steuereinrichtung 13. Die entnommene Menge kann jedoch auch auf andere Weise ermittelt und an die Steuereinrichtung übermittelt werden. Durch einen Vergleich der ursprünglichen Menge des Pflanzenschutzmittels, die in dem Kanister 1 enthalten war, und der entnommenen Menge erfasst die Steuereinrichtung 13 die jeweils in dem Kanister 1 befindliche Restemenge. Auf diese Weise kann die Steuereinrichtung 13 auch erfassen, wenn der Kanister 1 vollständig geleert ist.

Nach der Leerung des Kanisters 1 initiiert die Steuereinrichtung 13 automatisch die Spülung des Kanisters 1. Zum Spülen des Kanisters 1 ist eine Spüleinheit vorgesehen, die einen Spüldorn 14, eine mit dem Spüldorn 14 verbundene Spülleitung 17 und eine Hubvorrichtung 16 umfasst. Der Spüldorn 14 ist mechanisch über eine Stange 15 mit der Hubeinrichtung 16 verbunden. Die Hubeinrichtung 16 kann die Stange 15 in Richtung des Pfeils B hin und her bewegen.

Nachdem die Steuereinrichtung 13 erfasst hat, dass der Kanister 1 vollständig geleert ist und er gespült werden soll, überträgt die Steuereinrichtung 13 ein entsprechendes Signal an die Hubvorrichtung 16. Diese bewegt daraufhin den Spüldorn 14 in Richtung des Pfeils C (siehe Figur 2), sodass der Spüldorn 14 die Bodenwand 7 des Kanisters 1 durchsticht. Daraufhin öffnet die Steuereinrichtung 13 ein bei der Spülleitung 17 vorgesehenes Ventil 19, sodass eine in dem Rohr 18 befindliche, unter Druck stehende Spülflüssigkeit durch die Spülleitung 17 und mindestens eine in dem Spüldorn 14 gebildete Öffnung in den Kanister 1 eintritt und diesen ausspült. Die Spülflüssigkeit kann über die Öffnung 2 oder eine andere (nicht gezeigte) Öffnung des Kanisters 1 herausgelassen werden. Auf diese Weise kann der Kanister 1, nachdem er geleert worden ist, automatisch ausgespült werden.

Außerdem kann der RFID-Transponder 3 des Kanisters 1 zerstört werden. Hierfür kann dieser genau bei der Stelle des Kanisters 1 angeordnet sein, bei welcher der Spüldorn 14 den Kanister 1 durchsticht. Hierdurch ist der Kanister 1 nach dem Spülvorgang unbrauchbar.

Nach dem Spülen können noch geeignete Maßnahmen zum Nachtrocknen des Kanisters ergriffen werden.

Wenn der Spülvorgang abgeschlossen ist, kann der Spüldorn 14 wieder automatisch mittels der Hubvorrichtung 16 aus der Bodenwand 7 des Kanisters 1 herausgezogen werden. Danach dreht die Steuereinrichtung 13 die Aufnahmeeinheit 4 wieder um 180°, sodass die Öffnung 2 nach oben zeigt, wie es in Figur 1 gezeigt ist. Der Nutzer kann danach die Kupplung 8 lösen und den Kanister 1 entnehmen und entsorgen. Damit Spülflüssigkeit, die möglicherweise durch die von dem Spüldorn 14 gebildete Öffnung heraustropft, aufgefangen wird, kann bei der Aufnahmeeinheit 4 noch eine Abtropfwanne vorgesehen sein.

Wenn in der Entnahmeöffnung 2 des Kanisters 1 ein Ventil vorgesehen ist, welches automatisch schließt, wenn die Kupplung 8 gelöst wird, kann der Nutzer den Kanister 1 auch in der in Figur 2 gezeigten Stellung für die Entsorgung entnehmen. Dies hat den Vorteil, dass durch die Öffnung in der Bodenwand 7, welche durch den Spüldorn 14 erzeugt wurde, keine Spülflüssigkeit beim Herausnehmen des Kanisters 1 heraustropfen kann.

Mittels der erfindungsgemäßen Vorrichtung können somit Pflanzenschutzmittelkanister bzw. deren Inhalt automatisch erkannt, der Kanister 1 geleert und anschließend gespült werden.

### Bezugszeichenliste:

- 1: Behälter, Kanister
- 2: Entnahmeöffnung
- 3: Transponder
- 4: Aufnahmeeinheit
- 5: Welle
- 6: Motor
- 7: Bodenwand des Kanisters 1
- 8: Kupplung
- 9: Entnahmeleitung
- 10: Entnahmerohr
- 11: Fördereinrichtung
- 12: Durchflussmesser
- 13: Steuereinrichtung
- 14: Entnahmedorn
- 15: Stange
- 16: Hubvorrichtung
- 17: Spülleitung
- 18: Rohr
- 19: Ventil
- 20: Empfangseinrichtung

## Patentansprüche

1. Vorrichtung zum Entleeren und Spülen von mit Fluid gefüllten Behältern (1) mit
- einer Aufnahmeeinheit (4) zur Aufnahme des Behälters (1), wobei die Aufnahmeeinheit (4) eine Dreheinrichtung umfasst, mittels welcher der Behälter (1) nach dem Einsetzen in die Aufnahmeeinheit (4) um einen vorgegebenen Winkel drehbar ist,
- einer Entnahmeeinheit, die eine Entnahmeleitung (9), eine mit der Entnahmeleitung (9) verbundenen Kupplung (8) zum Anschluss an eine Entnahmeöffnung (2) des Behälters (1) und eine Fördereinrichtung (11) umfasst, mit welcher das in dem Behälter befindliche Fluid aus dem Behälter herausförderbar ist, und
- einer Spüleinheit, die einen Spüldorn (14), eine mit dem Spüldorn verbundene Spülleitung (17) und eine Steuereinrichtung (13) umfasst, wobei mittels der Steuereinrichtung (13) der Spüldorn (14) so bewegbar ist, dass er nach dem Entleeren des Behälters automatisch eine Wand (7) des Behälters (1) durchsticht und den Behälter (1) ausspült,
**dadurch gekennzeichnet, dass**
der Behälter (1) mittels der Dreheinrichtung (5, 6) um eine Achse (X) drehbar ist, die in einem Bereich von +/- 20° um die Horizontale ausgerichtet ist.

2. Vorrichtung nach Anspruch 1, **dadurch gekennzeichnet, dass** der Behälter (1) mittels der Dreheinrichtung (5, 6) um eine horizontale Achse (X) drehbar ist.

3. Vorrichtung nach einem der vorhergehenden Ansprüche, **dadurch gekennzeichnet, dass** die Spüleinheit eine Hubvorrichtung (16) umfasst, die mit dem Spüldorn (14) und der Steuereinrichtung (13) gekoppelt ist, sodass auf ein Signal der Steuereinrichtung (13) der Spüldorn (14) mittels der Hubvorrichtung (16) so bewegbar ist, dass er die Wand (7) des Behälters (1) durchsticht.

4. Vorrichtung nach einem der vorhergehenden Ansprüche, **dadurch gekennzeichnet, dass** die Vorrichtung eine erste Erfassungseinrichtung (3, 20) zum Erfassen der Menge des in dem Behälter befindlichen Fluids und eine zweite Erfassungseinrichtung (12) zum Erfassen der Menge des aus dem Behälter (1) entnommenen Fluids aufweist.

5. Vorrichtung nach Anspruch 4, **dadurch gekennzeichnet, dass** die erste Erfassungseinrichtung (3, 20) eine elektronische Empfangseinrichtung (20) umfasst, mittels welcher von dem aufgenommenen Behälter (1) ausgesandte Funksignale empfangbar sind.

6. Vorrichtung nach Anspruch 4 oder 5, **dadurch gekennzeichnet, dass** die Steuereinrichtung (13) datentechnisch mit der ersten und zweiten Erfassungseinrichtung (3, 20, 12) und der Spüleinheit gekoppelt ist, dass mittels der Steuereinrichtung (13) automatisch eine Leerung des Behälters (1) erfassbar und die anschießende Spülung des Behälters (1) initiierbar ist.

7. Verwendung der Vorrichtung nach einem der Ansprüche 1 bis 6 zum Entleeren und Spülen von Behältern (1), die mit Pflanzenschutzmittel gefüllt sind.

8. Verfahren zum Entleeren und Spülen von mit Fluid gefüllten Behältern, bei dem
- der Behälter von einer Aufnahmeeinheit (4) aufgenommen wird, wobei der Behälter (1) nach dem Einsetzen in die Aufnahmeeinheit (4) um einen vorgegebenen Winkel gedreht wird,
- eine Entnahmeöffnung (2) des Behälters (1) mit einer Kupplung (8) einer Entnahmeleitung (9) verbunden wird,
- das in dem Behälter (1) befindliche Fluid aus dem Behälter (1) herausgefördert wird,
- nach dem Entleeren des Behälters (1) eine Wand (7) des Behälters (1) von einem Spüldorn (14) automatisch durchstochen wird und
- der Behälter (1) mittels einer mit dem Spüldorn (14) verbundenen Spülleitung (17) mit einer Spülflüssigkeit ausgespült wird,
**dadurch gekennzeichnet, dass**
der Behälter (1) mittels der Dreheinrichtung (5, 6) um eine Achse (X) gedreht wird, die in einem Bereich von +/- 20° um die Horizontale ausgerichtet ist.

9. Verfahren nach Anspruch 8, **dadurch gekennzeichnet, dass** der Behälter (1) nach dem Einsetzen in die Aufnahmeeinheit (4) um den vorgegebenen Winkel automatisch gedreht wird.

10. Verfahren nach Anspruch 8 oder 9, **dadurch gekennzeichnet, dass** der Behälter (1) um eine horizontale Achse (X) gedreht wird.

11. Verfahren nach einem der Ansprüche 8 bis 10, **dadurch gekennzeichnet, dass** der Behälter (1) so gedreht wird, dass die Entnahmeöffnung (2) nach der Drehung nach unten zeigt.

12. Verfahren nach einem der Ansprüche 8 bis 11, **dadurch gekennzeichnet, dass** die Menge des in dem Behälter (1) befindlichen Fluids und die Menge des aus dem Behälter (1) entnommenen Fluids erfasst wird und, nachdem erfasst worden ist, dass der Behälter (1) geleert wurde, die Wand (7) des Behälters (1) von dem Spüldorn (14) automatisch durchstochen wird und der Behälter (1) mit der Spülflüssigkeit automatisch ausgespült wird.

## Claims

1. An apparatus for draining and rinsing containers (1) filled with fluid, comprising
- a receiving unit (4) for receiving the container (1), wherein the receiving unit (4) comprises a rotation device by means of which the container (1), after insertion into the receiving unit (4), is rotatable by a predetermined angle,
- a removal unit which comprises a removal line (9), a coupling (8) which is connected to the removal line (9) and is intended for connection to a removal opening (2) of the container (1), and a conveying device (11) with which the fluid located in the container is conveyable out of the container,
and
- a rinsing unit which comprises a rinsing spike (14), a rinsing line (17) connected to the rinsing spike, and a control device (13), wherein the rinsing spike (14) is movable by means of the control device (13) in such a manner that said rinsing spike, after draining of the container, automatically pierces a wall (7) of the container (1) and rinses out the container (1),
wherein
the container (1) is rotatable by means of the rotation device (5, 6) about an axis (X) which is oriented in a range of +/- 20° about the horizontal.

2. The apparatus according to claim 1, wherein the container (1) is rotatable by means of the rotation device (5, 6) about a horizontal axis (X).

3. The apparatus according to any of the preceding claims, wherein the rinsing unit comprises a lifting apparatus (16) which is coupled to the rinsing spike (14) and to the control device (13) such that, upon a signal of the control device (13), the rinsing spike (14) is movable by means of the lifting apparatus (16) in such a manner that said rinsing spike pierces the wall (7) of the container (1).

4. The apparatus according to any of the preceding claims, wherein the apparatus has a first detecting device (3, 20) for detecting the quantity of the fluid located in the container, and a second detecting device (12) for detecting the quantity of the fluid removed from the container (1).

5. The apparatus according to claim 4, wherein the first detecting device (3, 20) comprises an electronic receiving device (20) by means of which radio signals emitted by the received container (1) are receivable.

6. The apparatus according to claim 4 or 5, wherein the control device (13) is coupled by data systems technology to the first and second detecting device (3, 20, 12) and to the rinsing unit, wherein an emptying of the container (1) is automatically detectable by means of the control device (13) and the subsequent rinsing of the container (1) is initiatable.

7. The use of the apparatus according to one of claims 1 to 6 for draining and rinsing containers (1) which are filled with crop protection agents.

8. A method for draining and rinsing containers filled with fluid, in which
- the container is received by a receiving unit (4), wherein the container (1), after insertion into the receiving unit (4) is rotated by a predetermined angle,
- a removal opening (2) of the container (1) is connected to a coupling (8) of a removal line (9),
- the fluid located in the container (1) is conveyed out of the container (1),
- after the draining of the container (1), a wall (7) of the container (1) is automatically pierced by a rinsing spike (14), and
- the container (1) is rinsed out with a rinsing liquid by means of a rinsing line (17) connected to the rinsing spike (14), wherein the container (1) is rotated by means of the rotation device (5,6) about an axis (X), which is oriented in a range of +/- 20° about the horizontal.

9. The method according to claim 8, wherein the container (1), after insertion into the receiving unit (4) is automatically rotated by a predetermined angle.

10. The method according to claim 8 or 9, wherein the container (1) is rotated about a horizontal axis (X).

11. The method according to any of claims 8 to 10, wherein the container (1) is rotated in such a manner that the removal opening (2) points downward after the rotation.

12. The method according to any of claims 8 to 10, wherein the quantity of the fluid located in the container (1) and the quantity of the fluid removed from the container (1) are detected and, after it has been detected that the container (1) has been emptied, the wall (7) of the container (1) is automatically pierced by the rinsing spike (14) and the container (1) is automatically rinsed out with the rinsing liquid.

## Revendications

1. Dispositif de vidange et de rinçage de récipients (1) remplis de fluide, comprenant :
- une unité de réception (4) pour recevoir le récipient (1), l'unité de réception (4) comprenant un dispositif rotatif au moyen duquel le récipient (1) peut être tourné d'un angle prédéfini après l'insertion dans l'unité de réception (4),
- une unité de prélèvement qui comprend une conduite de prélèvement (9), un accouplement (8) connecté à la conduite de prélèvement (9) pour le raccordement à une ouverture de prélèvement (2) du récipient (1) et un dispositif de transport (11) avec lequel le fluide se trouvant dans le récipient peut être évacué du récipient, et
- une unité de rinçage qui comprend un mandrin de rinçage (14), une conduite de rinçage (17) connectée au mandrin de rinçage et un dispositif de commande (13), le mandrin de rinçage (14) pouvant être déplacé au moyen du dispositif de commande (13) de telle sorte qu'il perce automatiquement une paroi (7) du récipient (1) après la vidange du récipient et qu'il rince le récipient (1),
**caractérisé en ce que**
le récipient (1) peut tourner au moyen du dispositif rotatif (5, 6) autour d'un axe (X) qui est orienté dans une plage de ± 20° par rapport à l'horizontale.

2. Dispositif selon la revendication 1, **caractérisé en ce que** le récipient (1) peut tourner autour d'un axe horizontal (X) au moyen du dispositif rotatif (5, 6).

3. Dispositif selon l'une quelconque des revendications précédentes, **caractérisé en ce que** l'unité de rinçage comprend un dispositif de levage (16) qui est accouplé au mandrin de rinçage (14) et au dispositif de commande (13) de telle sorte qu'à la réception d'un signal du dispositif de commande (13), le mandrin de rinçage (14) puisse être déplacé au moyen du dispositif de levage (16) de telle sorte qu'il perce la paroi (7) du récipient (1).

4. Dispositif selon l'une quelconque des revendications précédentes, **caractérisé en ce que** le dispositif présente un premier dispositif de détection (3, 20) pour détecter la quantité de fluide se trouvant dans le récipient et un deuxième dispositif de détection (12) pour détecter la quantité de fluide prélevé du récipient (1).

5. Dispositif selon la revendication 4, **caractérisé en ce que** le premier dispositif de détection (3, 20) comprend un dispositif de réception électronique (20) au moyen duquel peuvent être reçus des signaux radio émis par le récipient reçu (1).

6. Dispositif selon la revendication 4 ou 5, **caractérisé en ce que** le dispositif de commande (13) est accouplé par une technique de données au premier et au deuxième dispositif de détection (3, 20, 12) et à l'unité de rinçage, **en ce qu'**une vidange du récipient (1) peut être détectée automatiquement au moyen du dispositif de commande (13) et le rinçage subséquent du récipient (1) peut être amorcé.

7. Utilisation du dispositif selon l'une quelconque des revendications 1 à 6, pour vidanger et rincer des récipients (1) qui sont remplis d'agents phytosanitaires.

8. Procédé pour vidanger et rincer des récipients remplis de fluide, dans lequel
- le récipient est reçu par une unité de réception (4), le récipient (1), après son insertion dans l'unité de réception (4), étant tourné d'un angle prédéfini,
- une unité de prélèvement (2) du récipient (1) est connectée à un accouplement (8) d'une conduite de prélèvement (9),
- le fluide se trouvant dans le récipient (1) est évacué du récipient (1),
- après la vidange du récipient (1), une paroi (7) du récipient (1) est automatiquement percée par un mandrin de rinçage (14) et
- le récipient (1) est rincé avec un liquide de rinçage au moyen d'une conduite de rinçage (17) connectée au mandrin de rinçage (14),
**caractérisé en ce que** le récipient (1) est tourné autour d'un axe (X) au moyen du dispositif rotatif (5, 6) qui est orienté dans une plage de ± 20° par rapport à l'horizontale.

9. Procédé selon la revendication 8, **caractérisé en ce que** le récipient (1), après son insertion dans l'unité de réception (4), est automatiquement tourné de l'angle prédéfini.

10. Procédé selon la revendication 8 ou 9, **caractérisé en ce que** le récipient (1) est tourné autour d'un axe horizontal (X).

11. Procédé selon l'une quelconque des revendications 8 à 10, **caractérisé en ce que** le récipient (1) est tourné de telle sorte que l'ouverture de prélèvement (2) soit orientée vers le bas après la rotation.

12. Procédé selon l'une quelconque des revendications 8 à 11, **caractérisé en ce que** la quantité de fluide se trouvant dans le récipient (1) et la quantité de fluide prélevé du récipient (1) sont détectées, et après que l'on a détecté que le récipient (1) a été vidangé, la paroi (7) du récipient (1) est automatiquement percée par le mandrin de rinçage (14) et le récipient (1) est automatiquement rincé avec le liquide de rinçage.
